# EUROPEAN PATENT SPECIFICATION

(11) **EP 4 603 891 B1**
(45) Date of publication and mention of the grant of the patent: **27.05.2026**
(21) Application number: 25155812.8
(22) Date of filing: 04.02.2025
(51) Int. Cl.: G02B 27/00, G06V 10/60, G06V 10/62, G06V 10/94, G02B 27/01, G06F 3/01, G06T 7/246, G06F 3/03

(54) **METHODS FOR HIGH INTEGRITY HEAD TRACKING FOR HEAD WORN DISPLAY SYSTEM**
VERFAHREN ZUR KOPFVERFOLGUNG MIT HOHER INTEGRITÄT FÜR EIN KOPFGETRAGENES ANZEIGESYSTEM
PROCÉDÉS DE SUIVI DE TÊTE À HAUTE INTÉGRITÉ POUR SYSTÈME D'AFFICHAGE PORTÉ SUR LA TÊTE

(30) Priority: 14.02.2024 US 202418441670
(43) Date of publication of application: 20.08.2025
(73) Proprietor: Rockwell Collins, Inc., Cedar Rapids, IA 52498 (US)
(72) Inventor: STEWARD, Jerad, Hillsboro, OR (US); BOGGS, Christopher M., Gainesville, VA (US); DRISCOLL, Troy D., West Linn, OR (US); JAEGER, Kurt I., Catlett, VA (US)
(74) Representative: Dehns

(56) References cited:
- EP-A1- 4 293 482
- US-A1- 2013 182 902
- US-A1- 2019 318 501
- US-B2- 10 134 192
- US-B2- 11 320 896
- SCOTT SPURLOCK ET AL: "Multi-camera head pose estimation using an ensemble of exemplars", DISTRIBUTED SMART CAMERAS, ACM, 2 PENN PLAZA, SUITE 701 NEW YORK NY 10121-0701 USA, 8 September 2015 (2015-09-08), pages 122 - 127, XP058073294, ISBN: 978-1-4503-3681-9, DOI: 10.1145/2789116.2789123

## Description

### TECHNICAL FIELD

The present disclosure relates generally to tracking, and, more particularly, to tracking using modulation of optical sources.

### BACKGROUND

Head worn display (HWD) systems (e.g., helmet mounted displays (HMD)) often render (e.g., as symbology or graphical elements) georeferenced objects. If the rendered georeferenced objects do not conform to their real-world views (e.g., within allowable tolerance), the rendered symbology may constitute hazardously misleading information (HMI). Crucial to ensuring HWD conformality is the alignment of the HWD headtracking system to the aircraft platform. For example, the headtracker determines an accurate position and orientation (e.g., pose) of a head of the pilot or crewmember wearing the HWD, relative to the aircraft reference frame (e.g., body frame, platform frame) in order to ensure that imagery and symbology displayed by the HWD is consistent with what the wearer is currently looking at.

Therefore, there is a need for a system and method that can address one or more of these issues. EP 4 293 482 relates to a head tracking system. US 2019/0318501 relates to tracking pose of a handheld object.

### SUMMARY

A system for spatial tracking is disclosed in accordance with one or more illustrative embodiments of the present disclosure. In one illustrative embodiment, the system may include light sources in a spatial arrangement relative to an object. In another illustrative embodiment, the system may include optical sensors configured to detect the light sources. In another illustrative embodiment, the system may include a controller communicatively coupled to the light sources and the optical sensors. In another illustrative embodiment, the controller may include one or more processors configured to execute a set of program instructions stored in a memory. In another illustrative embodiment, the set of program instructions may be configured to cause the processors to initialize tracking of the light sources. In another illustrative embodiment, the initialization of tracking may include determining modulation patterns that are mapped to the light sources, directing an adjustment of the state of the light sources based on the modulation patterns, receiving images via the optical sensors, identifying features including feature positions based on the images, correlating the features to the light sources, and determining a pose of the object based on the correlation, feature positions, and spatial arrangement of the light sources, where the pose includes a direction and a position in three-dimensional space.

In a further aspect, the correlating of the features may be further based on search regions of the images, where the search regions are based on at least one of a previous known pose of the object or previously identified feature locations. In another aspect, a particular search region may be configured to be filtered out based on an expected non-viewability of a particular light source relative to a particular optical sensor. In another aspect, the identification of the features may include identifying a group of adjacent pixels based on a brightness of pixels of an image and identifying a centroid of the group of adjacent pixels. In another aspect, the determination of the pose may be based on a selection of the pose from a set of respective poses determined and associated with a respective image of a respective optical sensor. In another aspect, the determination of the pose may be based on a combination of multiple images from multiple optical sensors at a particular point in time. In another aspect, the controller may be further configured to output an optical-inertial pose, via a hybrid module, based on the pose, inertial data via an inertial sensor of the system, and aircraft navigation data via a navigation system of an aircraft. In another aspect, the system may comprise an aircraft-based head worn display (HWD) system and the object may be coupled to at least one of the light sources or the optical sensors. In another aspect, the object may comprise an aircraft-based head worn display (HWD) sub-system.

In another aspect, the controller may be further configured for frame by frame tracking of the features based on the feature positions of the initialization of the tracking, where the frame by frame tracking of the features includes a frame pose determined via the frame by frame tracking is based on predicted search regions of the images, where the predicted search regions are determined based on inertial data via an inertial sensor and one or more previous poses. In another aspect, the controller may be further configured to, based on the modulation patterns, adjust for anomalies associated with at least one of a lack of an expected feature or an unexpected feature. In another aspect, a hamming distance defined as a countable number of different simultaneous states over a particular sequence of planned states of a particular modulation pattem may be at least two compared to another modulation pattern. In another aspect, a total number of ON states may be higher than a total number of OFF states for each sequence of planned states of each modulation pattern. In another aspect, the spatial arrangement of the light sources may comprise a non-planar arrangement such that the light sources are spaced out in two orthogonal directions.

A method for spatial tracking is disclosed in accordance with one or more illustrative embodiments of the present disclosure. In one illustrative embodiment, the method may include initializing a tracking of light sources. In another illustrative embodiment, the initialization may involve determining modulation patterns that are mapped to light sources in a spatial arrangement relative to an object, including a modulation pattern mapped to each light source over a time period, where each of the modulation patterns includes a sequence of planned states comprising an ON state and an OFF state of a corresponding light source. In another illustrative embodiment, the method may include directing an adjustment of a state of the light sources based on the modulation patterns. In another illustrative embodiment, the method may include receiving images over the time period via optical sensors configured to detect the light sources. In another illustrative embodiment, the method may include identifying features including feature positions based on the images over the time period. In another illustrative embodiment, the method may include correlating the features to the light sources based on at least the features over the time period and the modulation pattern over the time period. In another illustrative embodiment, the method may include determining a pose of the object based on at least the correlation, the feature positions, and the spatial arrangement of the light sources, where the pose includes a direction and a position in three-dimensional space.

In a further aspect, the correlating of the features may be further based on search regions of the images, where the search regions are based on at least one of a previous known pose of the object or previously identified feature locations. In another aspect, the method may include filtering out a particular search region based on an expected non-viewability of a particular light source relative to a particular optical sensor. In another aspect, the identification of the features may include identifying a group of adjacent pixels based on a brightness of pixels of an image of the images and identifying a centroid of the group of adjacent pixels. In another aspect, the determination of the pose may be based on a selection of the pose from a set of respective poses determined and associated with a respective image of a respective optical sensor. In another aspect, the determination of the pose may be based on a combination of multiple images from multiple optical sensors at a particular point in time. In another aspect, the method may include outputting an optical-inertial pose, via a hybrid module, based on the pose, inertial data from an inertial sensor, and aircraft navigation data from a navigation system of an aircraft. In another aspect, the method may be performed using an aircraft-based head worn display (HWD) system and where the object is coupled to at least one of the light sources or the optical sensors of the aircraft-based head worn display (HWD) system. In another aspect, the object may comprise an aircraft-based head worn display (HWD) sub-system. In another aspect, the method may include frame by frame tracking of the features based on the feature positions of the initialization of the tracking, where the frame by frame tracking of the features includes a frame pose determined via the frame by frame tracking is based on predicted search regions of the images, where the predicted search regions are determined based on inertial data from an inertial sensor and one or more previous poses. In another aspect, the method may include adjusting for anomalies associated with at least one of a lack of an expected feature or an unexpected feature based on the modulation patterns. In another aspect, a hamming distance defined as a countable number of different simultaneous states over a particular sequence of planned states of a particular modulation pattern is at least two compared to another modulation pattern. In another aspect, a total number of ON states is higher than a total number of OFF states for each sequence of planned states of each modulation pattern. In another aspect, the spatial arrangement of the light sources is a non-planar arrangement such that the light sources are spaced out in two orthogonal directions.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims.
FIG. 1 is a simplified block diagram of a system for spatial tracking, in accordance with one or more embodiments of the present disclosure.
FIG. 2 is a three-dimensional diagram of a spatial arrangement of optical sensors and light sources, in accordance with one or more embodiments of the present disclosure.
FIG. 3 is a block diagram of a system 138 in a head worn display (HWD) configuration for spatial tracking of a pose of an object 302 such as a HWD or object in the cockpit of an aircraft, in accordance with one or more embodiments of the present disclosure.
FIG. 4A is a three-dimensional diagram of light sources having a colinear dispersion.
FIG. 4B is a three-dimensional diagram of light sources spaced out along an area, in accordance with one or more embodiments of the present disclosure.
FIG. 5 is a two-dimensional diagram of search regions for detecting features, in accordance with one or more embodiments of the present disclosure.
FIG. 6 is a conceptual flow diagram for spatial tracking using a hybrid module, in accordance with one or more embodiments of the present disclosure.
FIG. 7 is a conceptual flow block diagram for spatial tracking, in accordance with one or more embodiments of the present disclosure.
FIG. 8 is a diagram of various anomalies of search regions and features, in accordance with one or more embodiments of the present disclosure.
FIG. 9 is two views including a first angle view of an object without overlapping search regions, and a second angle view with one of the overlapping search regions being ignored because a feature is predicted to be occluded, thereby preventing an anomaly from occurring, in accordance with one or more embodiments of the present disclosure.
FIG. 10 is a view of a table of hamming distances, in accordance with one or more embodiments of the present disclosure.
FIG. 11 is two diagrams of modulation patterns for spatial tracking, in accordance with one or more embodiments of the present disclosure.
FIG. 12 is a flow diagram illustrating steps performed in a method for spatial tracking, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

Broadly speaking, embodiments of the inventive concepts disclosed herein are directed to a system and method for spatial tracking of an object using blinking (e.g., ON/OFF) lights such as LEDs. Various concepts may be used for benefits related to computational efficiency and integrity of the tracking.

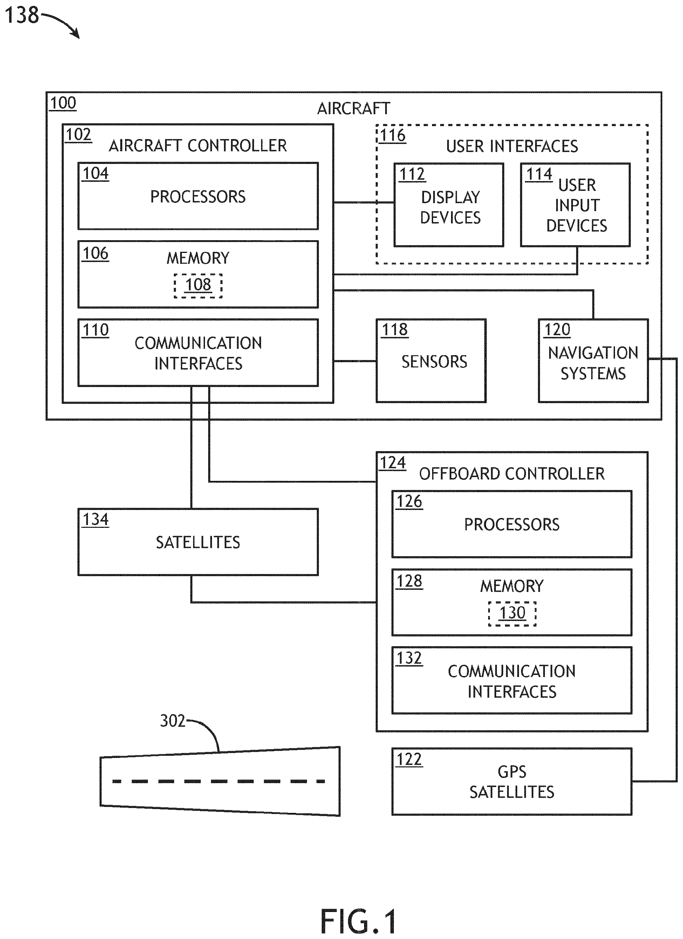

FIG. 1 illustrates a simplified block diagram of a system 138 for spatial tracking, in accordance with one or more embodiments of the present disclosure.

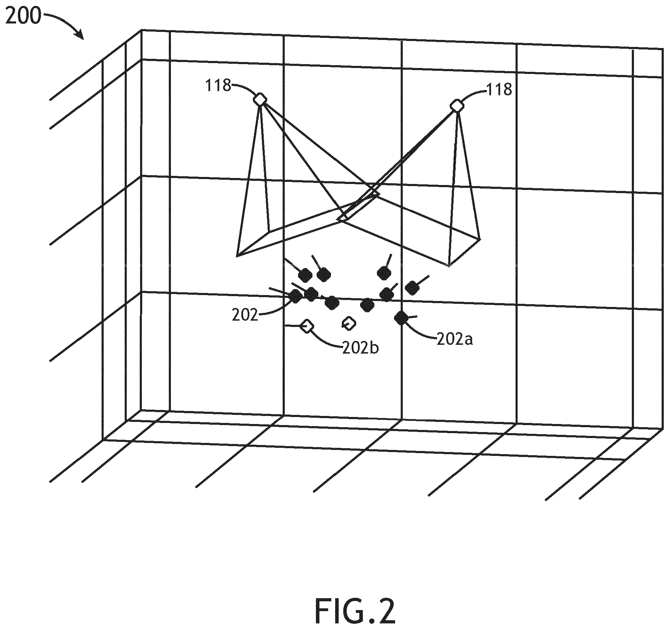

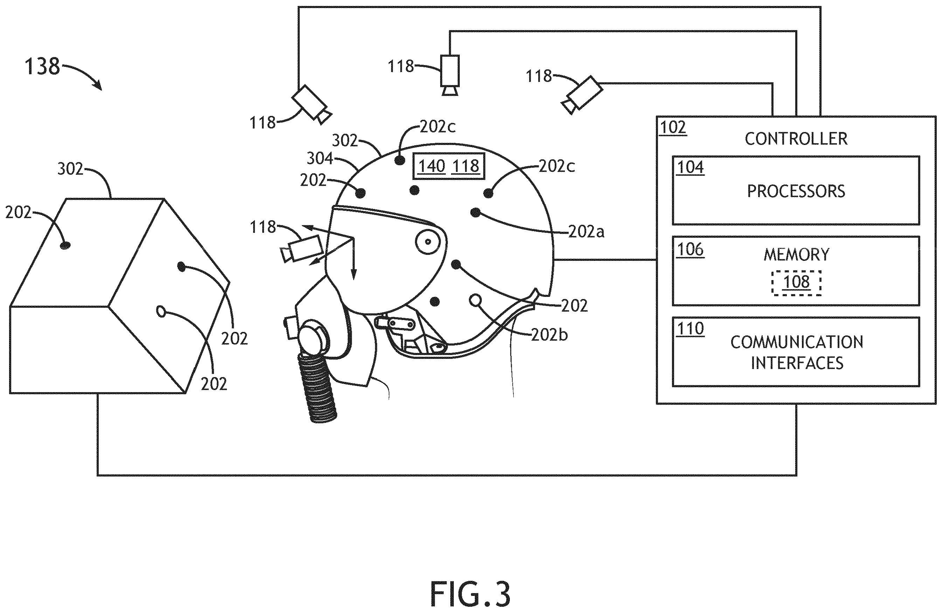

Note that the figures herein such as FIG. 1 are nonlimiting examples and the methodology herein may be used for any number of tracking purposes. For example, any object may be tracked. For example, embodiments herein may be applied to any system 138 with known (fixed) spatial arrangement of blinking LEDs 202 (e.g., see FIG. 3) viewed by cameras 118, to track the relative distance and rotation between the LEDs 202 and the cameras 118. For instance, a runway 302 may be tracked using an aircraft, or vice versa, using optical sensors 118 (e.g., external cameras 118 or light sources 202 on outside of aircraft 100). In another instance, a head worn display (HWD) of FIG. 2 may be tracked.

The system 138 may include sensors 118 such as optical sensors 118 configured to track light sources 202. For example, the system 138 may include multi-pixel cameras 118 for capturing images of light emitting diodes (LEDs) on an object 302 such as a HWD sub-system 304, a cockpit object (e.g., dashboard), a runway 302, and/or any other object 302. Processing (e.g., pose estimation) may occur on-board an aircraft 100 using an aircraft controller 102, at an off-board controller 124 (e.g., cloud ground-based server), and/or one or more of any number of controllers. For example, use of the term 'controller 102' and the like, unless otherwise specified, means one or more of any number of controllers at any location.

The system 138 may include (or be) an aircraft-based head worn display (HWD) system 138. The object 302 may be coupled to at least one of the light sources 202 or the optical sensors 118. For example, the light sources 202 may be built into (and/or attached to) a housing of a HWD object 302 (e.g., helmet) shown in FIG. 3. For instance, the object 302 may include (or be) an aircraft-based head worn display (HWD) sub-system 304 with a HWD display 112 screen configured for displaying images (e.g., positioning symbology accurately) based on poses determined herein.

FIG. 2 illustrates a three-dimensional diagram 200 of a spatial arrangement of optical sensors 118 and light sources 202, in accordance with one or more embodiments of the present disclosure.

The spatial arrangement of the light sources 202 may be any arrangement spanning an area. For example, the spatial arrangement of the light sources 202 may be a planar arrangement (e.g., along two axis of a two-dimensional plane on the front of a helmet) such that the light sources 202 are spaced out in two orthogonal directions. In some example, the spatial arrangement of the light sources 202 may be a non-planar arrangement such that the light sources 202 are spaced out in three orthogonal directions (e.g., around a curved helmet along three axes). ON light sources 202a include light sources in an ON state (e.g., turned on, activated, and shining out light such as infrared LED light), and OFF light sources 202b include light sources in an OFF state. The light sources 202 may uniquely blink in a modulation pattern (i.e., turn ON and OFF) for tracking purposes.

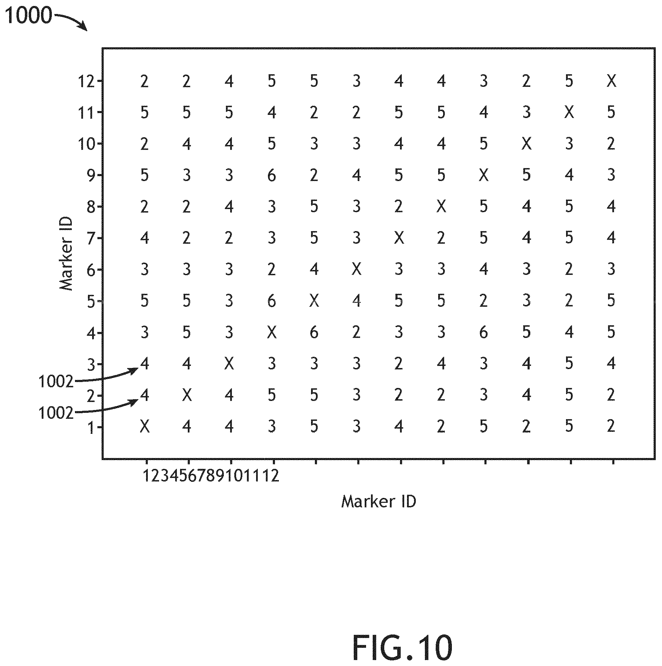

Adjacent light sources 202 may be configured for modulation patterns that are more dissimilar (e.g., a hamming distance 1002 of three or more; see FIG. 10 description for explanation of hamming distance 1002). Light sources 202c farther apart (e.g., more than three inches) from each other may be configured for modulation patterns that are more similar (e.g., a hamming distance 1002 of two or less). In this way, closer light sources 202c may use the more dissimilar blinking modulation patterns so they can be more easily distinguished. This configuration may protect against an erroneous confusion of similar modulation patterns of neighboring light sources 202 caused by positions of search regions 504 being slightly inaccurate.

The light sources 202 may be any light sources, such as infrared LEDs (IR LEDs) (e.g., non-visible to a human IR LEDs), human-visible LEDs, and/or the like.

FIG. 3 illustrates a block diagram of a system 138 in a head worn display (HWD) configuration for spatial tracking of a pose of an object 302 such as a HWD or other object in the cockpit of an aircraft 100, in accordance with one or more embodiments of the present disclosure.

The system 138 for spatial tracking may include light sources 202 in a spatial arrangement relative to an object 302.

The system 138 may also include optical sensors 118 that may be configured to detect/image the light sources 202.

A controller 102 (of system 138) may be communicatively coupled (e.g., wired or wirelessly) to the light sources 202 and the optical sensors 118.

The controller 102 may include one or more processors 104 configured to execute a set of program instructions stored in memory 106. In some embodiments, the controller 102 initializes a tracking of the light sources 202. This initialization may include determining modulation patterns (e.g., blinking patterns) that are mapped (i.e., unique to a particular light source 202), over a time period. For example, the time period may be longer than a frame by frame tracking. For instance, the time period may be more than 4 frames, more than 10 milliseconds, more than 100 milliseconds, and/or the like.

Each of the modulation patterns may include a sequence of planned states (e.g., four or more binary bits of either ON or OFF states) comprising an ON state and an OFF state of a corresponding light source 202.

The controller 102 may be configured to direct an adjustment of a state of the light sources 202 based on the modulation patterns (i.e., turn the lights 202 on and off), receive images using the optical sensors 118 over the time period, identify features 502 based on the images, and correlate (e.g., match, compare, pair) the features 502 to the light sources 202 based on at least the features over the time period and the modulation pattern over the time period.

The controller 102 may also be configured to determine a pose of the object 302 based on at least the correlation, the feature positions, and the spatial arrangement of the light sources 202. The pose may include a direction (e.g., vector) and a position in three-dimensional space. For instance, the pose may include all six degrees of freedom (e.g., three angles of an orientation, and three coordinates of a position).

The correlation of the features 502 may be based on search regions 504 of the images. Correlation in this context means knowing which light sources 118 are matched with which features 502 in the images, such as by comparing the modulation patterns. Such a comparison may be done over multiple frames so at least a portion of the modulation patterns is able to be determined. But correlation may also be done frame by frame (e.g., using a single image), to maintain correlation, once the tracking is initialized. This may make the computation more efficient and more accurate to maintain tracking. The search regions 504 may be based on at least one of a previous known pose of the object 302 (to determine a predicted search region 504) or previously identified feature locations (e.g., two-dimensional coordinates of the image such as a centroid of each feature 502) (to determine a static search region 504).

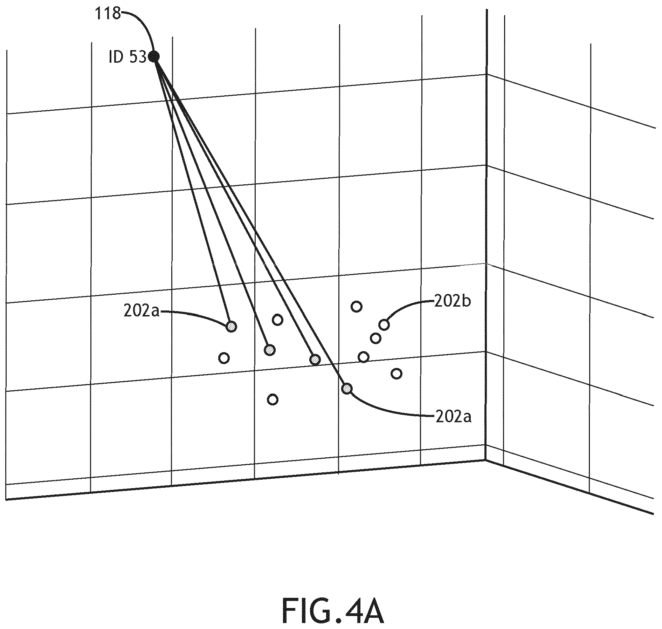

FIG. 4A illustrates a three-dimensional diagram of ON light sources 202 having a colinear dispersion. This may lead to worse performance if the tracking of features 502 are all along the same axis as that may cause limitations in detecting rotations along the same axis. Rather, as noted above, the light sources 118 may be spread over a two-dimensional area to improve tracking.

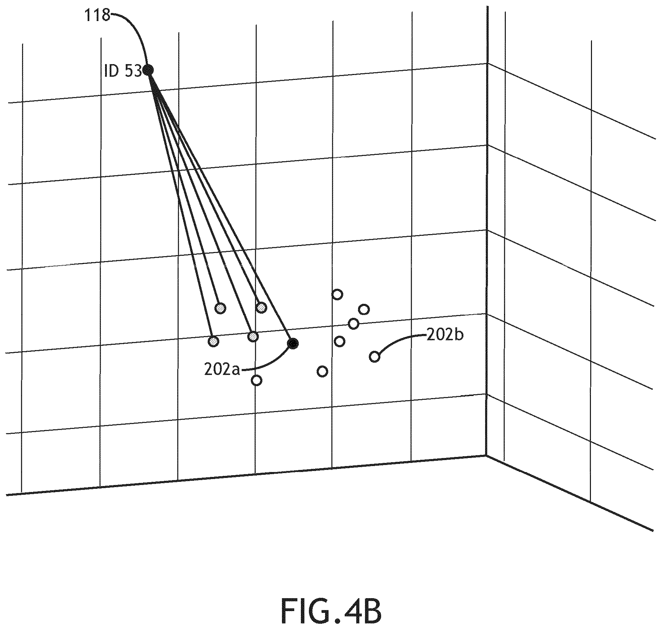

FIG. 4B illustrates a three-dimensional diagram of ON light sources 202 spaced out along an area (e.g., X-axis and Y-axis; any two orthogonal axis; or the like), in accordance with one or more embodiments of the present disclosure.

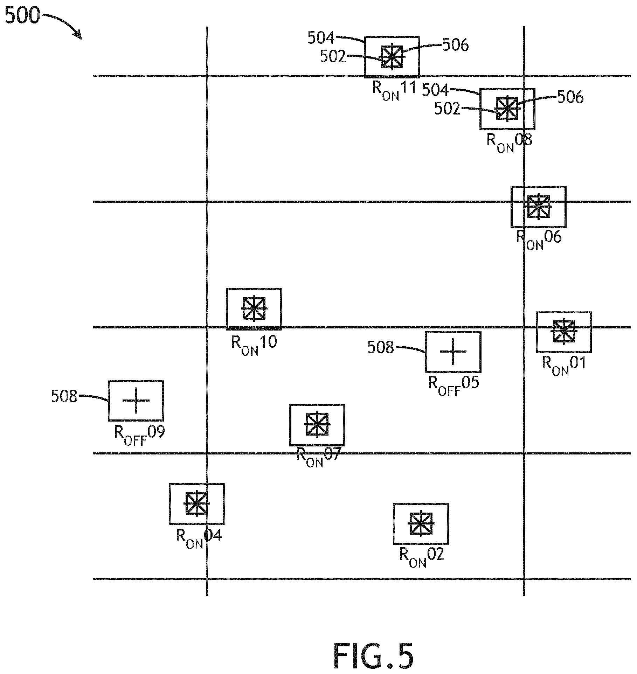

FIG. 5 illustrates a two-dimensional diagram 500 of search regions 504 for detecting features 502 of an image, in accordance with one or more embodiments of the present disclosure.

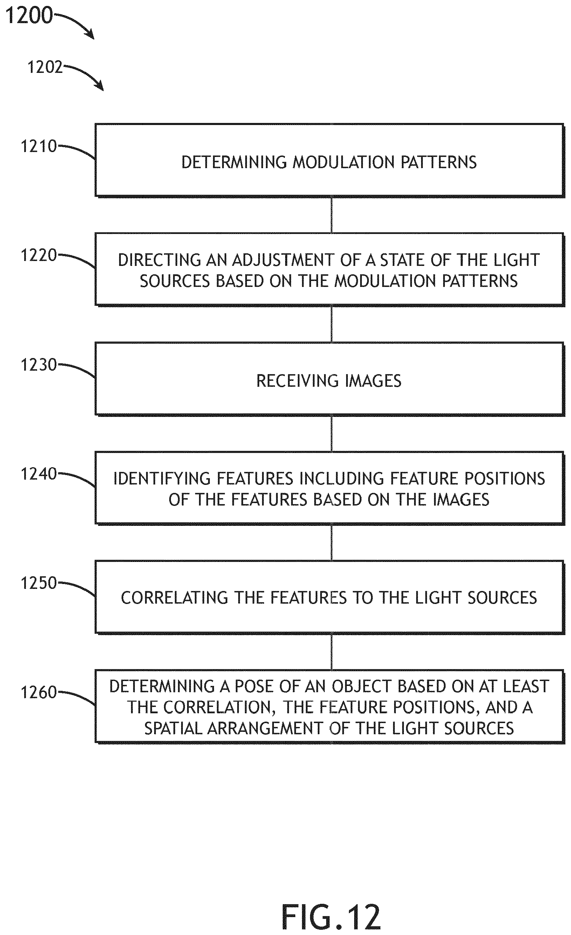

The identification of the features 502 (e.g., of step 1240 of FIG. 12) may include identifying a group of adjacent pixels 506 of an image based on a brightness of pixels and identifying a centroid (e.g., midpoint in X and Y direction) of the group of adjacent pixels 506. This may approximate the center of the light source 202. For instance, the centroid may be a sub-pixel accuracy measurement (e.g., a centroid of two pixels may be 0.5 between a pixel at location 0 and a pixel at location 1).

The image may be processed in binary, such that all pixels above a certain brightness threshold are set to 1 (e.g., white) and the other pixels are set to 0 (e.g., black). For example, a threshold cutoff may be used as a filter to produce such a binary image. Then adjacent pixels of value 1 may be grouped in the groups of adjacent pixels 506. In embodiments, these groups 506 are identified if the groups 506 are located within a search region 504, or else filtered out (e.g., ignored; logged as an anomaly; and/or the like).

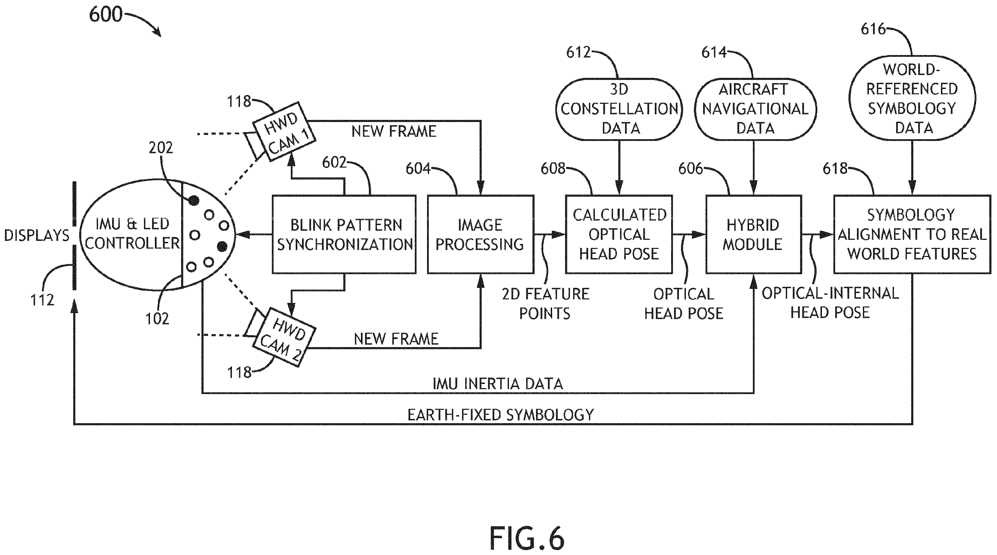

FIG. 6 illustrates a conceptual flow diagram of a method 600 for spatial tracking using a hybrid module, in accordance with one or more embodiments of the present disclosure.

The method 600 may include a blink pattern synchronization step 602 (e.g., adjusting the states of the light sources 202 and syncing a global time with the optical sensors 118.) For example, a common controller 102 may use timestamps (e.g., 2024-01-14T15:30:00.123) to know which images were taken at the same time as when a particular pattern of light sources 202 were in their ON states so proper correlation may be performed.

Alternatively, in some embodiments, a blink pattern synchronization (using an initial syncing of global timestamps or the like between images and light sources 202) is not necessarily used. For example, it may not be known which light sources 202 are in an ON state during which image frame. For example, the method 600 may include an alternate synching using the modulation pattern without necessarily knowing (or relying on) a timestamp at which an image was taken. For instance, the blinking patterns of the features 502 may be compared to the known modulation patterns to determine which images correspond/match to which timing of the sequences of the known modulation patterns. Multiple images over multiple frames may be used to determine a portion of a blinking pattern for a portion of the features 502. Then the portion of the blinking patterns (i.e., modulation patterns) for the portion of the features 502 may be compared to a sliding window of each possible range of times and corresponding states at those ranges that could be a match. If the modulation patterns are unique enough over time with respect to other modulation patterns (e.g., if a particular modulation pattern is not merely a time-shifted copy of other modulation patterns), then a single global timing may be determined-solving for the timing of the received images in relation to the modulation patterns. An advantage may include not necessarily sending or receiving a common time reference between the image detectors 118 and the light sources 202 and allowing for receiving images at any time. However, in some embodiments, this configuration may use relatively longer modulation patterns, and longer initializations of tracking to avoid using time-shifted versions of the same modulation patterns.

The method 600 may include an image processing step 604, such as processing the image using controller 102. For example, one or more steps to identify the features 502 may be used such as, but not necessarily limited to or requiring, applying binary filters to the image (e.g., so pixels are either 0 or 1); grouping adjacent pixels 506 with value of 1 (e.g., bright pixels); and measuring and calculating a centroid of each group 506.

The method 600 may include calculating a pose step 608 (e.g., optical head pose based on optical/camera images). For example, knowledge of the spatial arrangement 612 (i.e., 3D constellation data 612) of the light sources 202 and any analysis/data from step 604 may be used to determine the pose. For instance, the feature positions of the features 502 (after being correlated to their corresponding light sources 202) may be used to deterministically calculate the orientation and position of the headset, as having enough light sources 202 dispersed in enough directions allows for a single mathematical solution of pose. For instance, the light sources 202 may be calibrated such that a feature position defines a position or set of positions that limits where each light source 202 could be in space. For example, each pixel of a calibrated optical detector 118 may correspond to a virtual vector extending from the optical detector 118 in three-dimensional space. For instance, at least in theory using perfect measurements, two light sources 202 with a known distance between each other and known to be constrained to two non-parallel virtual vectors already can be used to solve for five of the six degrees of freedom using a single image if the image is perfectly calibrated for and a high enough resolution. In practice, additional light sources 202 may be used for increased accuracy and for solving for all degrees of freedom. For instance, the system 138 may include three or more light sources 202.

The method 600 may include a hybrid module 606 (e.g., set of program instructions such as computer code such as C++, Python, etc.; hardware implemented functions such as field programmable gate arrays (FPGAs); and/or the like) to determine an optical-inertia pose relative to an inertial reference frame. For example, the controller 102 may be configured to output an optical-inertial pose, via a hybrid module 606, based on the pose (i.e., optical pose), inertial data (e.g., accelerometer data) via an inertial sensor 140 of the system 138, and aircraft navigation data 614 (e.g., aircraft position data, aircraft inertia data) via a navigation system 120 of an aircraft 100. The inertia data of a, for example, (HWD) sub-system 304 may be used to increase the accuracy of a subsequent (e.g., final) pose estimation. For instance, the optical-inertia pose may be estimated using the inertial data of the inertial sensor 140 for a point in time after the last image was captured (e.g., a current point in time, a point in time slightly in the future, and/or the like). For example, the optical pose may be determined at discrete instances of time (for every image) and the optical-inertia pose may be determined at one or more discrete instances of time between each optical pose. The optical-inertia pose may be based on inertial data such as estimated velocity (e.g., translational velocity in 3D space, and rotational velocity around each axis). For instance, an optical-inertia position may be determined by a calculation based on a simplified equation such as current_position*translational_velocity*time. Such a configuration may provide a higher rate of update of the pose than just an optical pose. Such a configuration may provide robustness as well, such as allowing a fallback determination of a pose even after one or more failed/lost images, by relying on the inertia data. This may increase integrity of the system 138.

The HWD may receive coordinates and information related to world-referenced symbology data 616 (e.g., known positions of real-world external objects/features in a global coordinate system). The alignment/position of symbols in a HWD may need to adjust for changes to an aircraft's 100 own movement/orientation, if the system 138 is to properly use real-world external objects. A symbology alignment (to real-world features) module 618 may be configured to align (e.g., render in a certain position of a display 112) earth-fixed symbology (e.g., text/symbols rendered to float above an external real-world feature). For example, the symbology alignment module 618 may determine an alignment of a symbol based on the pose (e.g., optical-inertial pose) and world-referenced symbology data 616.

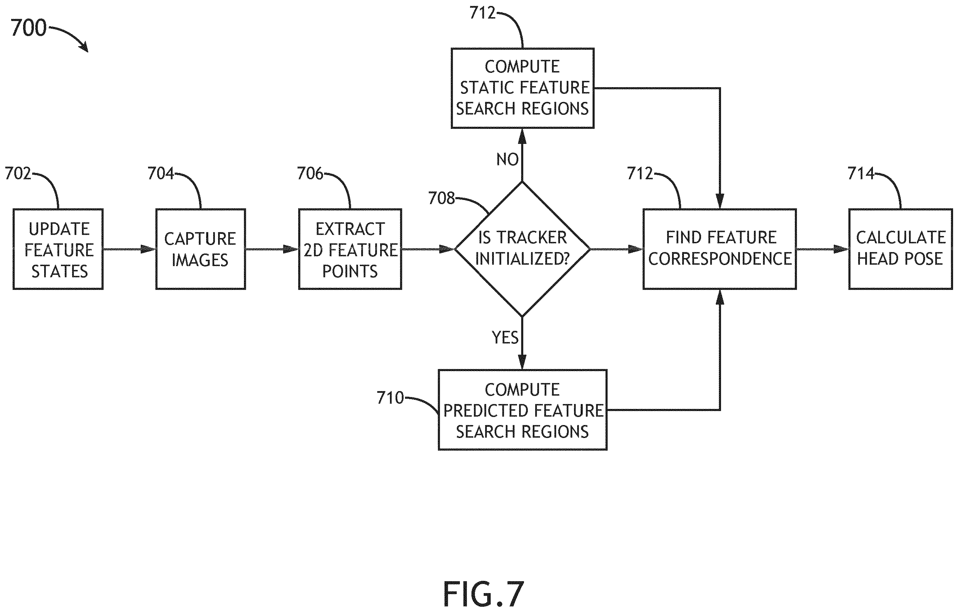

FIG. 7 illustrates a conceptual flow block diagram of a method 700 for spatial tracking, in accordance with one or more embodiments of the present disclosure.

The method 700 may include an updating of (light source 202) feature states 702 (step). For example, an adjustment of the state of the light sources 202 may be made based on the modulation pattern, which may include step 1220 of FIG. 12.

The method 700 may include capturing images 704 (step), such as receiving images using the optical sensors 118.

The method 700 may include extracting two-dimensional features 706 (step), which may include step 604 of FIG. 6 and/or step 1240 of FIG. 12. For example, features 502 may be identified by grouping white pixels together.

The method 700 may then apply a determination of initialization in step 708. For example, the system 138 may use an if-then statement to decide which type of search region 504 (e.g., predicted or static) to use to correlate the features 502 based on whether the tracking of the light sources 202 has happened (e.g., whether steps 1202 of FIG. 12 are complete).

If the determination is positive (e.g., tracking initialization affirmed), then a step 710 that is based on pose-based predicted search regions 504 may be used, based on a previous pose already known. For example, the locations of the features 502 may be able to be predicted based on the pose of the last frame. For instance, an optical-inertia pose may be used to predict where the search regions 504 will move to between image frames. This may allow for more advanced anomaly mitigation, such as being able to know which features 502 are supposed to be ON or OFF or overlapping ahead of time. For instance, an anticipation of a rotation of a HWD helmet around a Y-axis (vertical axis) based on inertia data applied to a previous pose, may allow a prediction that in the next image frame, two features 502 will overlap and/or some of the features 502 will shift to the left a couple of pixels. This prediction may include calculating a change in position of each feature 502 based on a manipulation/movement of a 3D model of the spatial arrangement of the light sources 202 as viewed from an optical sensor 118.

If the determination is negative (e.g., tracking initialization not yet completed), then a step 712 that is based on a static search region 504 may be used. For example, the static search region 504 may be based on a centroid of the features 502. For instance, feature locations from a previous frame may be used as a center of a search region to maintain consistency of tracking each feature 502 separately. In this way, for example, a feature may be tracked over multiple frames to determine the blinking/modulation pattern over time, for correlation. As a new centroid is calculated, then a new static search region 504 location is updated for the next frame. This method does not necessarily require knowing which features 502 are correlated to which light sources 202 and may be used in initialization.

The method 700 may then find feature correspondence 714 (e.g., correlating the features 502 in step 1250 of FIG. 12).

The method 700 may then calculate head pose 716 (e.g., determine the pose in step 1260 of FIG. 12).

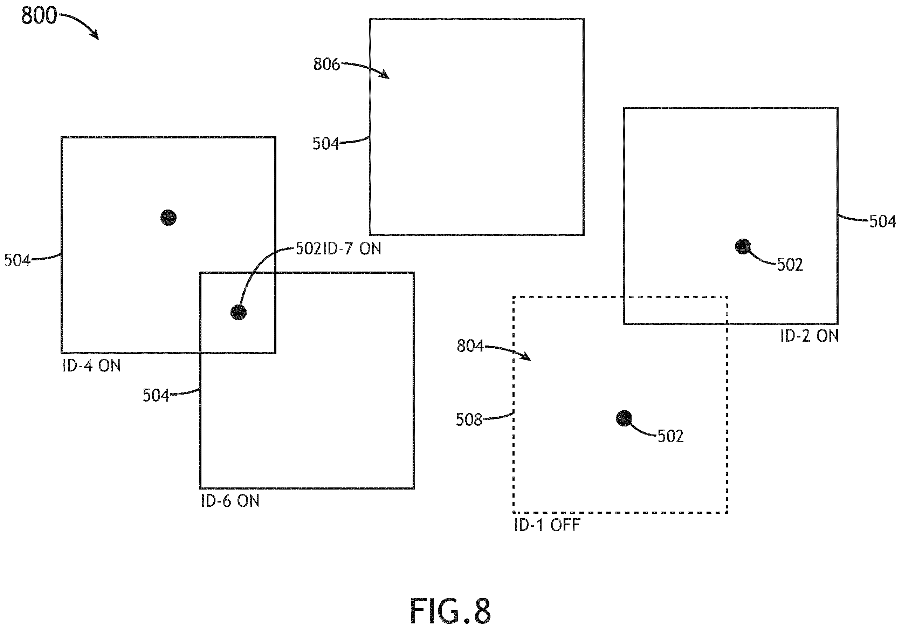

FIG. 8 illustrates a diagram 800 of various anomalies 802, 804, 806 of search regions 504 and features 502, in accordance with one or more embodiments of the present disclosure.

The controller 102 may be further configured to, based on the modulation patterns, adjust for anomalies 802, 804, 806 associated with at least one of a lack of an expected feature 502 or an unexpected feature 502. For example, an anomaly 804 of an unexpected feature 502 in an OFF region 508 (e.g., where the light source 202 should be in an OFF state based on the modulation pattern) may be filtered out (e.g., ignored and not included in the features). An anomaly 802 of an additional feature 502 in the same search region 504 may be ignored (e.g., one or all of such features 502 may be filtered out). A missing anomaly 806 of an expected (but missing) feature (not labeled) in a search region 504 may be adjusted for by allowing a certain number of missed features 502 (e.g., more than 30% of features 502 missing) before an initialization of tracking is restarted.

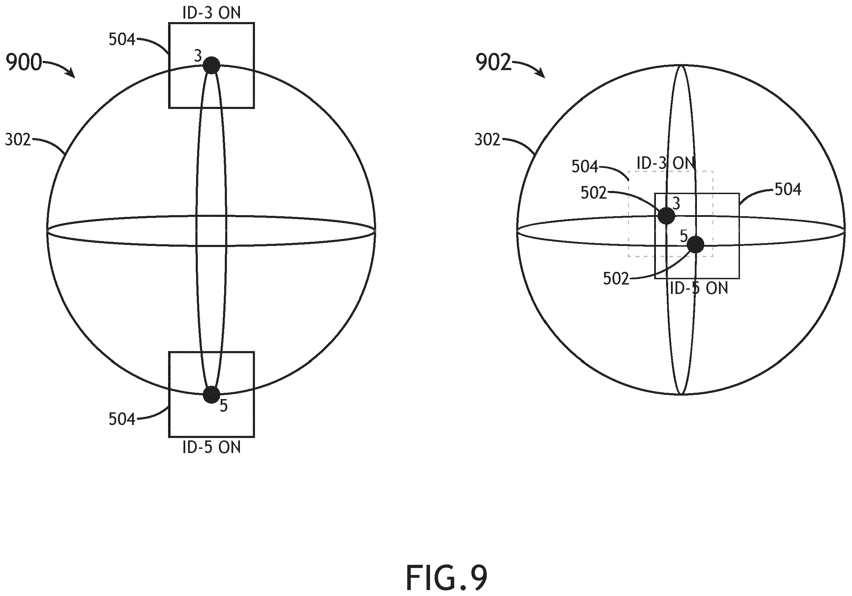

FIG. 9 is two views including a first angle view 900 of an object 302 without overlapping search regions 504, and a second angle view 902 with an overlapping search region 504 being ignored because a feature 502 is predicted to be occluded (e.g., occluded by HWD plastic housing), thereby preventing an anomaly from occurring, in accordance with one or more embodiments of the present disclosure.

A particular search region 504 may be configured to be filtered out based on an expected non-viewability of a particular light source 202 relative to a particular optical sensor 118.

For example, the system 138 may calculate known occlusions that will be likely or nearly likely to occur based on a position of a light source 202 and an optical sensor 118 on the opposite side of something (e.g., an object 302). For instance, the optical sensor 118 may be on the opposing side of a plastic housing of the HWD, and therefore unable to be seen by the optical sensor 118.

FIG. 10 illustrates a table 1000 of hamming distances 1002 (e.g., quantifiable difference between two patterns of bits, in accordance with one or more embodiments of the present disclosure. For example, 1001 and 0111 have a hamming distance of three because the first three bits are different.

The modulation patterns may be based on (and/or characterized by) a hamming distance 1002. For example, for purposes of the present disclosure, a hamming distance 1002 is defined as a countable number of different simultaneous states (e.g., ON state vs. OFF state at the same time) over a particular sequence of planned states of particular modulation patterns. For instance, the determining modulation patterns of step 1210 may be based on a hamming distance 1002 of at least two. For instance, the determining modulation patterns of step 1210 may be based on a hamming distance 1002 of at least four. For example, each modulation pattern may include some number of bits (e.g., 12 bits) and at least two of those bits may be different at a particular point in time compared to all other modulation patterns of the other light sources 118. This may allow for (and/or aid in) unique identification of each light source 118 during the correlation of the features 502.

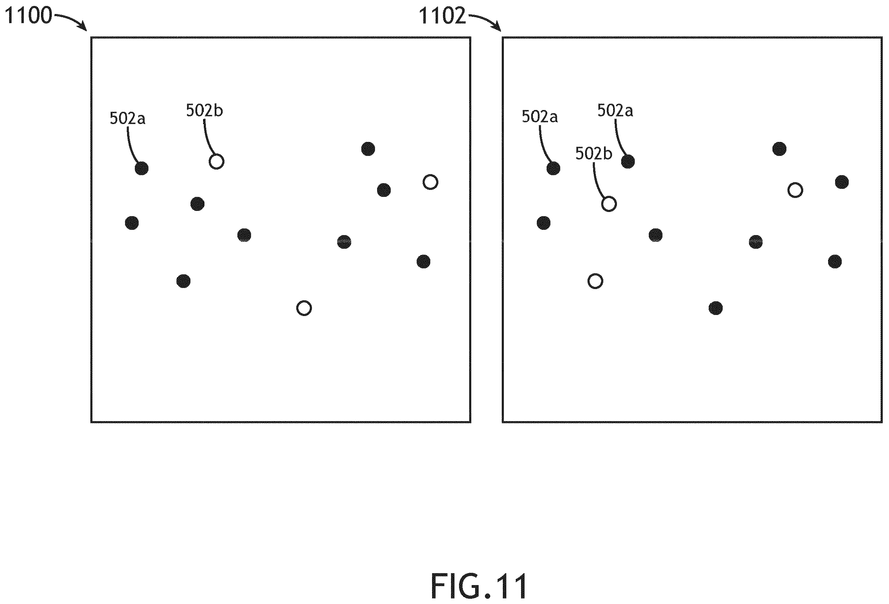

FIG. 11 illustrates diagrams 1100, 1102 of modulation patterns for spatial tracking, in accordance with one or more embodiments of the present disclosure.

The features 502a in an ON state that are imaged, may outnumber features 502b in an OFF state that are not identified because they are OFF. For example, a total number of ON states may be higher than a total number of OFF states for each sequence of planned states of each modulation pattern. In this way, the system 138 may bias to increase identification of each light source 118 by having the light sources 118 in an ON state most of the time.

FIG. 12 illustrates a flow diagram illustrating steps performed in a method 1200 for spatial tracking, in accordance with one or more embodiments of the present disclosure.

At step 1202, the tracking of the light sources 202 may be initialized (e.g., started). For instance, the system 138 may be configured to initiate a tracking based on a tracking of the features 502 being lost (such as losing tracking due to a large occlusion) and/or when the system 138 is turned on.

At step 1210 (e.g., sub-step 1210), modulation patterns that are mapped to light sources 202 in a spatial arrangement relative to an object 302 may be determined.

At step 1220, an adjustment of a state of the light sources 202 may be directed based on the modulation patterns.

At step 1230, features 502 and feature locations (e.g., centroid or the like) may be identified based on the images.

At step 1240, images over the time period may be received via optical sensors 118 that may be configured to detect the light sources 202.

At step 1250, the features 502 may be correlated to the light sources 202. For example, the states of the features 502 may be matched/compared to the states of the modulation patterns that control the light sources 202, which may be stored/determined using the controller 102. The correlation may take longer during step 1202 of initializing if a previous pose is not yet known.

At step 1260, a pose of an object 302 based on at least the correlation of step 1250 (e.g., where each feature 502 is now known as matched to a particular optical sensor 118 based on the modulation patterns), the feature positions (e.g., pixel positions of the centroids of each feature 502), and a spatial arrangement of the light sources 202 (e.g., a known distance in space between fixed locations of each of the light sources 202). For example, the spatial arrangement may be based on a computer design (e.g., 3D model) of the light sources 202, manually measured distances, triangulated distances during a calibration mode, and/or the like. The spatial arrangement of the light sources 202 may be mapped to the feature locations based on the correlation of step 1250 and the pose then known relative to the optical sensors 118. For example, the optical sensors 118 may be calibrated to triangulate two dimensional locations in images of at least three optical sensors 118 to real-world three-dimensional coordinates of a pose.

At an optional step, a frame by frame tracking of the features 502 is performed based on the feature positions of the initialization of the tracking. For example, once step 1202 is performed, the controller 102 may enter a separate mode where tracking of the features 502 to generate a pose is performed for each frame, rather than over multiple frames. The frame by frame tracking of the features 502 may include a frame pose determined via the frame by frame tracking based on predicted search regions 504 of the images. The predicted search regions 504 may be determined based on inertial data via an inertial sensor 140 and may be based on one or more previous poses (e.g., previous frame by frame poses, or the last (and/or only) pose determine in step 1202).

The feature locations and/or pose may be determined, in some embodiments, using a monocular image (e.g., image from a single optical sensor 118). In some embodiments, the feature locations and/or pose may be determined using multiple images (for more accuracy, such as using triangulation).

The determination of the pose may be based on a selection of the pose from a set of respective poses determined and associated with a respective image of a respective optical sensor 118. For example, each optical sensor 118 may be used independently to determine a pose, and then a particular pose from a set of poses from multiple cameras 118 may be selected as the most accurate. For instance, any method may be used such as choosing the pose determined using an image having the least number of anomalies; using the pose that is the median of all of the poses to avoid outliers; and/or the like.

The determination of the pose may, alternatively and/or in addition, be based on a combination of multiple images from multiple optical sensors 118 at a particular point in time. For example, the pose may be based on an average of poses from multiple optical sensors 118, or the features 502 may individually be triangulated (e.g., using three optical sensors 118) across multiple images in three-dimensional space.

Referring now to FIG. 1, the aircraft 100 may include an aircraft controller 102 (e.g., on-board/run-time controller). The aircraft controller 102 may include one or more processors 104, memory 106 configured to store one or more program instructions 108, and/or one or more communication interfaces 110.

The aircraft 100 may include an avionics environment such as, but not limited to, a cockpit. The aircraft controller 102 may be coupled (e.g., physically, electrically, and/or communicatively) to one or more display devices 112. The one or more display devices 112 may be configured to display three-dimensional images and/or two-dimensional images.

The aircraft controller 102 may be coupled (e.g., physically, electrically, and/or communicatively) to one or more user input devices 114. The one or more display devices 112 may be coupled to the one or more user input devices 114. For example, the one or more display devices 112 may be coupled to the one or more user input devices 114 by a transmission medium that may include wireline and/or wireless portions. The one or more display devices 112 may include and/or be configured to interact with one or more user input devices 114.

The one or more display devices 112 and the one or more user input devices 114 may be standalone components within the aircraft 100. It is noted herein, however, that the one or more display devices 112 and the one or more user input devices 114 may be integrated within one or more common user interfaces 116.

Where the one or more display devices 112 and the one or more user input devices 114 are housed within the one or more common user interfaces 116, the aircraft controller 102, one or more offboard controllers 124, and/or the one or more common user interfaces 116 may be standalone components. It is noted herein, however, that the aircraft controller 102, the one or more offboard controllers 124, and/or the one or more common user interfaces 116 may be integrated within one or more common housings or chassis.

The aircraft controller 102 may be coupled (e.g., physically, electrically, and/or communicatively) to and configured to receive data from one or more aircraft sensors 118. The one or more aircraft sensors 118 may be configured to sense a particular condition(s) external or internal to the aircraft 100 and/or within the aircraft 100. The one or more aircraft sensors 118 may be configured to output data associated with particular sensed condition(s) to one or more components/systems onboard the aircraft 100. Generally, the one or more aircraft sensors 118 may include, but are not limited to, one or more airspeed sensors, one or more radio altimeters, one or more flight dynamic sensors (e.g., sensors configured to sense pitch, bank, roll, heading, and/or yaw), one or more weather radars, one or more air temperature sensors, one or more surveillance sensors, one or more air pressure sensors, one or more engine sensors, and/or one or more optical sensors (e.g., one or more cameras configured to acquire images in an electromagnetic spectrum range including, but not limited to, the visible light spectrum range, the infrared spectrum range, the ultraviolet spectrum range, or any other spectrum range known in the art).

The aircraft controller 102 may be coupled (e.g., physically, electrically, and/or communicatively) to and configured to receive data from one or more navigational systems 120. The one or more navigational systems 120 may be coupled (e.g., physically, electrically, and/or communicatively) to and in communication with one or more GPS satellites 122, which may provide vehicular location data (e.g., aircraft location data) to one or more components/systems of the aircraft 100. For example, the one or more navigational systems 120 may be implemented as a global navigation satellite system (GNSS) device, and the one or more GPS satellites 122 may be implemented as GNSS satellites. The one or more navigational systems 120 may include a GPS receiver and a processor. For example, the one or more navigational systems 120 may receive or calculate location data from a sufficient number (e.g., at least four) of GPS satellites 122 in view of the aircraft 100 such that a GPS solution may be calculated.

It is noted herein the one or more aircraft sensors 118 may operate as a navigation device 120, being configured to sense any of various flight conditions or aircraft conditions typically used by aircraft and output navigation data (e.g., aircraft location data, aircraft orientation data, aircraft direction data, aircraft speed data, and/or aircraft acceleration data). For example, the various flight conditions or aircraft conditions may include altitude, aircraft location (e.g., relative to the earth), aircraft orientation (e.g., relative to the earth), aircraft speed, aircraft acceleration, aircraft trajectory, aircraft pitch, aircraft bank, aircraft roll, aircraft yaw, aircraft heading, air temperature, and/or air pressure. By way of another example, the one or more aircraft sensors 118 may provide aircraft location data and aircraft orientation data, respectively, to the one or more processors 104, 126.

The aircraft controller 102 of the aircraft 100 may be coupled (e.g., physically, electrically, and/or communicatively) to one or more offboard controllers 124.

The one or more offboard controllers 124 may include one or more processors 126, memory 128 configured to store one or more programs instructions 130 and/or one or more communication interfaces 132.

The aircraft controller 102 and/or the one or more offboard controllers 124 may be coupled (e.g., physically, electrically, and/or communicatively) to one or more satellites 134. For example, the aircraft controller 102 and/or the one or more offboard controllers 124 may be coupled (e.g., physically, electrically, and/or communicatively) to one another via the one or more satellites 134. For instance, at least one component of the aircraft controller 102 may be configured to transmit data to and/or receive data from at least one component of the one or more offboard controllers 124, and vice versa. By way of another example, at least one component of the aircraft controller 102 may be configured to record event logs and may transmit the event logs to at least one component of the one or more offboard controllers 124, and vice versa. By way of another example, at least one component of the aircraft controller 102 may be configured to receive information and/or commands from the at least one component of the one or more offboard controllers 124, either in response to (or independent of) the transmitted event logs, and vice versa.

It is noted herein that the aircraft 100 and the components onboard the aircraft 100, the one or more offboard controllers 124, the one or more GPS satellites 122, and/or the one or more satellites 134 may be considered components of a system 138, for purposes of the present disclosure.

The one or more processors 104, 126 may include any one or more processing elements, micro-controllers, circuitry, field programmable gate array (FPGA) or other processing systems, and resident or external memory for storing data, executable code, and other information accessed or generated by the aircraft controller 102 and/or the one or more offboard controllers 124. In this sense, the one or more processors 104, 126 may include any microprocessor device configured to execute algorithms and/or program instructions. It is noted herein, however, that the one or more processors 104, 126 are not limited by the materials from which it is formed or the processing mechanisms employed therein and, as such, may be implemented via semiconductor(s) and/or transistors (e.g., using electronic integrated circuit (IC) components), and so forth. In general, the term "processor" may be broadly defined to encompass any device having one or more processing elements, which execute a set of program instructions from a non-transitory memory medium (e.g., the memory), where the set of program instructions is configured to cause the one or more processors to carry out any of one or more process steps.

The memory 106, 128 may include any storage medium known in the art suitable for storing the set of program instructions executable by the associated one or more processors. For example, the memory 106, 128 may include a non-transitory memory medium. For instance, the memory 106, 128 may include, but is not limited to, a read-only memory (ROM), a random access memory (RAM), a magnetic or optical memory device (e.g., disk), a magnetic tape, a solid state drive, flash memory (e.g., a secure digital (SD) memory card, a mini-SD memory card, and/or a micro-SD memory card), universal serial bus (USB) memory devices, and the like. The memory 106, 128 may be configured to provide display information to the display device (e.g., the one or more display devices 112). In addition, the memory 106, 128 may be configured to store user input information from a user input device of a user interface. The memory 106, 128 may be housed in a common controller housing with the one or more processors. The memory 106, 128 may, alternatively or in addition, be located remotely with respect to the spatial location of the processors and/or a controller. For instance, the one or more processors and/or the controller may access a remote memory (e.g., server), accessible through a network (e.g., internet, intranet, and the like).

The aircraft controller 102 and/or the one or more offboard controllers 124 may be configured to perform one or more process steps, as defined by the one or more sets of program instructions 108, 130. The one or more process steps may be performed iteratively, concurrently, and/or sequentially. The one or more sets of program instructions 108, 130 may be configured to operate via a control algorithm, a neural network (e.g., with states represented as nodes and hidden nodes and transitioning between them until an output is reached via branch metrics), a kernel-based classification method, a Support Vector Machine (SVM) approach, canonical-correlation analysis (CCA), factor analysis, flexible discriminant analysis (FDA), principal component analysis (PCA), multidimensional scaling (MDS), principal component regression (PCR), projection pursuit, data mining, prediction-making, exploratory data analysis, supervised learning analysis, Boolean logic (e.g., resulting in an output of a complete truth or complete false value), fuzzy logic (e.g., resulting in an output of one or more partial truth values instead of a complete truth or complete false value), or the like. For example, in the case of a control algorithm, the one or more sets of program instructions 108, 130 may be configured to operate via proportional control, feedback control, feedforward control, integral control, proportional-derivative (PD) control, proportional-integral (PI) control, proportional-integral-derivative (PID) control, or the like.

The one or more communication interfaces 110, 132 may be operatively configured to communicate with one or more components of the aircraft controller 102 and/or the one or more offboard controllers 124. For example, the one or more communication interfaces 110, 132 may also be coupled (e.g., physically, electrically, and/or communicatively) with the one or more processors 104, 126 to facilitate data transfer between components of the one or more components of the aircraft controller 102 and/or the one or more offboard controllers 124 and the one or more processors 104, 126. For instance, the one or more communication interfaces 110, 132 may be configured to retrieve data from the one or more processors 104, 126, or other devices, transmit data for storage in the memory 106, 128, retrieve data from storage in the memory 106, 128, or the like. By way of another example, the aircraft controller 102 and/or the one or more offboard controllers 124 may be configured to receive and/or acquire data or information from other systems or tools by a transmission medium that may include wireline and/or wireless portions. By way of another example, the aircraft controller 102 and/or the one or more offboard controllers 124 may be configured to transmit data or information (e.g., the output of one or more procedures of the inventive concepts disclosed herein) to one or more systems or tools by a transmission medium that may include wireline and/or wireless portions (e.g., a transmitter, receiver, transceiver, physical connection interface, or any combination). In this regard, the transmission medium may serve as a data link between the aircraft controller 102 and/or the one or more offboard controllers 124 and the other subsystems (e.g., of the aircraft 100 and/or the system 138). In addition, the aircraft controller 102 and/or the one or more offboard controllers 124 may be configured to send data to external systems via a transmission medium (e.g., network connection).

The one or more display devices 112 may include any display device known in the art. For example, the display devices 112 may include, but are not limited to, one or more head-down displays (HDDs), one or more HUDs, one or more multi-function displays (MFDs), or the like. For instance, the display devices 112 may include, but are not limited to, a liquid crystal display (LCD), a light-emitting diode (LED) based display, an organic light-emitting diode (OLED) based display, an electroluminescent display (ELD), an electronic paper (E-ink) display, a plasma display panel (PDP), a display light processing (DLP) display, or the like. Those skilled in the art should recognize that a variety of display devices may be suitable for implementation in the present invention and the particular choice of display device may depend on a variety of factors, including, but not limited to, form factor, cost, and the like. In a general sense, any display device capable of integration with the user input device (e.g., touchscreen, bezel mounted interface, keyboard, mouse, trackpad, and the like) is suitable for implementation in the present invention.

The one or more user input devices 114 may include any user input device known in the art. For example, the user input device 114 may include, but is not limited to, a keyboard, a keypad, a touchscreen, a lever, a knob, a scroll wheel, a track ball, a switch, a dial, a sliding bar, a scroll bar, a slide, a handle, a touch pad, a paddle, a steering wheel, a joystick, a bezel input device, or the like. In the case of a touchscreen interface, those skilled in the art should recognize that a large number of touchscreen interfaces may be suitable for implementation in the present invention. For instance, the display device may be integrated with a touchscreen interface, such as, but not limited to, a capacitive touchscreen, a resistive touchscreen, a surface acoustic based touchscreen, an infrared based touchscreen, or the like. In a general sense, any touchscreen interface capable of integration with the display portion of a display device is suitable for implementation in the present invention. In another embodiment, the user input device may include, but is not limited to, a bezel mounted interface.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "in embodiments", "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or subcombination of two or more such features, along with any other features which may not necessarily be expressly described or inherently present in the instant disclosure.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made. Components illustrated and described herein are merely examples of a system/device and components that may be used to implement embodiments of the inventive concepts. Furthermore, any dimensions, degrees, and/or numerical ranges provided herein are to be understood as non-limiting examples unless otherwise specified in the claims. The invention is defined by the appended claims.

## Claims

1. A system for spatial tracking, the system comprising:
light sources (202) in a spatial arrangement relative to an object;
optical sensors (118) configured to detect the light sources (202); and
a controller communicatively coupled to the light sources (202) and the optical sensors (118), wherein the controller comprises one or more processors configured to execute a set of program instructions stored in a memory, the set of program instructions configured to cause the one or more processors to:
initialize a tracking of the light sources (202) comprising:
determining modulation patterns that are mapped to the light sources (202), including a modulation pattern mapped to each light source over a time period, wherein each of the modulation patterns comprises a sequence of planned states comprising an ON state and an **OFF** state of a corresponding light source;
directing an adjustment of a state of the light sources (202) based on the modulation patterns;
receiving images via the optical sensors (118) over the time period;
identifying features including feature positions of the features based on the images over the time period;
correlating the features to the light sources (202) based on at least the features over the time period and the modulation pattern over the time period; and
determine a pose of the object based on at least the correlation, the feature positions, and the spatial arrangement of the light sources (202), wherein the pose comprises a direction and a position in three-dimensional space;
wherein the correlating of the features is further based on search regions of the images, wherein the search regions are based on at least one of a previous known pose of the object or previously identified feature locations;
wherein a particular search region is configured to be filtered out based on an expected non-viewability of a particular light source relative to a particular optical sensor.

2. The system of Claim 1, wherein the identification of the features comprises: identifying a group of adjacent pixels based on a brightness of pixels of an image of the images; and identifying a centroid of the group of adjacent pixels.

3. The system of Claim 1 or 2, wherein the determination of the pose is based on a selection of the pose from a set of respective poses determined and associated with a respective image of a respective optical sensor.

4. The system of any preceding Claim, wherein the determination of the pose is based on a combination of multiple images from multiple optical sensors (118) at a particular point in time.

5. The system of any preceding Claim, wherein the controller is further configured to output an optical-inertial pose, via a hybrid module, based on the pose, inertial data via an inertial sensor of the system, and aircraft navigation data via a navigation system of an aircraft.

6. The system of any preceding Claim, wherein the system comprises an aircraft-based head worn display (HWD) system and wherein the object is coupled to at least one of the light sources (202) or the optical sensors (118).

7. The system of any preceding Claim, wherein the object comprises an aircraft-based head worn display (HWD) sub-system.

8. The system of any preceding Claim, wherein the controller is further configured for a frame by frame tracking of the features based on the feature positions of the initialization of the tracking, wherein the frame by frame tracking of the features includes a frame pose determined via the frame by frame tracking is based on predicted search regions of the images, wherein the predicted search regions are determined based on inertial data via an inertial sensor and one or more previous poses.

9. The system of any preceding Claim, wherein the controller is further configured to, based on the modulation patterns, adjust for anomalies associated with at least one of a lack of an excepted feature or an unexpected feature.

10. The system of any preceding claim, wherein a hamming distance, defined as a countable number of different simultaneous states over a particular sequence of planned states, of a particular modulation pattern is at least two compared to another modulation pattern.

11. The system of any preceding claim, wherein a total number of ON states is higher than a total number of **OFF** states for each sequence of planned states of each modulation pattern.

12. The system of any preceding claim, wherein the spatial arrangement of the light sources (202) comprises a non-planar arrangement such that the light sources (202) are spaced out in two orthogonal directions.

13. A method for spatial tracking, the method comprising:
initializing a tracking of light sources (202) comprising:
determining modulation patterns that are mapped to light sources (202) in a spatial arrangement relative to an object, including a modulation pattern mapped to each light source over a time period, wherein each of the modulation patterns comprises a sequence of planned states comprising an ON state and an **OFF** state of a corresponding light source;
directing an adjustment of a state of the light sources (202) based on the modulation patterns;
receiving images over the time period via optical sensors (118) configured to detect the light sources (202);
identifying features including feature positions of the features based on the images over the time period;
correlating the features to the light sources (202) based on at least the features over the time period and the modulation pattern over the time period; and
determining a pose of the object based on at least the correlation, the feature positions, and the spatial arrangement of the light sources (202), wherein the pose comprises a direction and a position in three-dimensional space;
wherein the correlating the features is further based on search regions of the images, wherein the search regions are based on at least one of a previous known pose of the object or previously identified feature locations;
wherein a particular search region is configured to be filtered out based on an expected non-viewability of a particular light source relative to a particular optical sensor.

14. The method of Claim 12 or 13, further comprising outputting an optical-inertial pose, via a hybrid module, based on the pose, inertial data from an inertial sensor, and aircraft navigation data from a navigation system of an aircraft.

15. The method of any of Claims 12-14, wherein the method is performed using an aircraft-based head worn display (HWD) system and wherein the object is coupled to at least one of the light sources (202) or the optical sensors (118) of the aircraft-based head worn display (HWD) system; and/or wherein the object comprises a head worn display (HWD) sub-system; and/or wherein a total number of ON states is higher than a total number of **OFF** states for each sequence of planned states of each modulation pattern.

## Patentansprüche

1. System zur räumlichen Verfolgung, wobei das System Folgendes umfasst:
Lichtquellen (202) in einer räumlichen Anordnung relativ zu einem Objekt;
optische Sensoren (118), die konfiguriert sind, um die Lichtquellen (202) zu erfassen; und
eine Steuerung, die kommunikativ an die Lichtquellen (202) und die optischen Sensoren (118) gekoppelt ist, wobei die Steuerung einen oder mehrere Prozessoren umfasst, die konfiguriert sind, um einen Satz von Programmanweisungen auszuführen, der in einem Speicher gespeichert ist, wobei der Satz von Programmanweisungen konfiguriert ist, um den einen oder die mehreren Prozessoren zu Folgendem zu veranlassen:
Einleiten einer Verfolgung der Lichtquellen (202), umfassend:
Bestimmen von Modulationsmustern, die den Lichtquellen (202) zugeordnet sind, beinhaltend ein Modulationsmuster, das jeder Lichtquelle über einen Zeitraum zugeordnet ist, wobei jedes der Modulationsmuster eine Sequenz von geplanten Zuständen umfasst, die einen EIN-Zustand und einen AUS-Zustand einer entsprechenden Lichtquelle umfassen;
Anweisen einer Anpassung eines Zustands der Lichtquellen (202) basierend auf den Modulationsmustern;
Empfangen von Bildern über die optischen Sensoren (118) über den Zeitraum;
Identifizieren von Merkmalen, beinhaltend Merkmalspositionen der Merkmale basierend auf den Bildern über den Zeitraum;
Korrelieren der Merkmale mit den Lichtquellen (202) basierend mindestens auf den Merkmalen über den Zeitraum und dem Modulationsmuster über den Zeitraum; und
Bestimmen einer Stellung des Objekts basierend mindestens auf der Korrelation, den Merkmalspositionen und der räumlichen Anordnung der Lichtquellen (202), wobei die Stellung eine Richtung und eine Position im dreidimensionalen Raum umfasst;
wobei das Korrelieren der Merkmale ferner auf Suchbereichen der Bilder basiert, wobei die Suchbereiche auf mindestens einem von einer vorherigen bekannten Stellung des Objekts oder zuvor identifizierten Merkmalsstellen basieren;
wobei ein spezieller Suchbereich konfiguriert ist, um basierend auf einer erwartenden Nicht-Sichtbarkeit einer speziellen Lichtquelle relativ zu einem speziellen optischen Sensor herausgefiltert zu werden.

2. System nach Anspruch 1, wobei die Identifizierung der Merkmale Folgendes umfasst: Identifizieren einer Gruppe benachbarter Pixel basierend auf einer Helligkeit von Pixeln eines Bildes der Bilder; und Identifizieren eines Schwerpunkts der Gruppe benachbarter Pixel.

3. System nach Anspruch 1 oder 2, wobei die Bestimmung der Stellung auf einer Auswahl der Stellung aus einem Satz von bestimmten und mit einem jeweiligen Bild eines jeweiligen optischen Sensors verknüpften Stellungen basiert.

4. System nach einem der vorhergehenden Ansprüche, wobei die Bestimmung der Stellung auf einer Kombination mehrerer Bilder von mehreren optischen Sensoren (118) zu einem speziellen Zeitpunkt basiert.

5. System nach einem der vorhergehenden Ansprüche, wobei die Steuerung ferner konfiguriert ist, um über ein Hybridmodul eine optisch-inertiale Stellung basierend auf der Stellung, Inertialdaten über einen Inertialsensor des Systems und Luftfahrzeugnavigationsdaten über ein Navigationssystem eines Luftfahrzeugs auszugeben.

6. System nach einem der vorhergehenden Ansprüche, wobei das System ein luftfahrzeugbasiertes System für eine kopfgetragene Anzeige (HWD) umfasst und wobei das Objekt an mindestens eine der Lichtquellen (202) oder einen der optischen Sensoren (118) gekoppelt ist.

7. System nach einem der vorhergehenden Ansprüche, wobei das Objekt ein luftfahrzeugbasiertes Teilsystem für eine kopfgetragene Anzeige (HWD) umfasst.

8. System nach einem der vorhergehenden Ansprüche, wobei die Steuerung ferner für eine Einzelbild-für-Einzelbild-Verfolgung der Merkmale basierend auf den Merkmalspositionen bei der Einleitung der Verfolgung konfiguriert ist, wobei die Einzelbild-für-Einzelbild-Verfolgung der Merkmale eine Einzelbildstellung beinhaltet, die über die Einzelbild-für-Einzelbild-Verfolgung basierend auf vorhergesagten Suchbereichen der Bilder bestimmt wird, wobei die vorhergesagten Suchbereiche basierend auf Inertialdaten über einen Inertialsensor und einer oder mehreren vorherigen Stellungen bestimmt werden.

9. System nach einem der vorhergehenden Ansprüche, wobei die Steuerung ferner konfiguriert ist, um basierend auf den Modulationsmustern Anomalien anzupassen, die mit einem von einem Fehlen eines erwarteten Merkmals oder einem unerwarteten Merkmal verknüpft sind.

10. System nach einem der vorhergehenden Ansprüche, wobei eine Hamming-Distanz, definiert als zählbare Anzahl unterschiedlicher gleichzeitiger Zustände über eine spezielle Sequenz von geplanten Zuständen, eines speziellen Modulationsmusters verglichen mit einem anderen Modulationsmuster mindestens zwei beträgt.

11. System nach einem der vorhergehenden Ansprüche, wobei die Gesamtanzahl der EIN-Zustände für jede Sequenz von geplanten Zuständen jedes Modulationsmusters größer ist als die Gesamtanzahl der AUS-Zustände.

12. System nach einem der vorhergehenden Ansprüche, wobei die räumliche Anordnung der Lichtquellen (202) eine nicht-planare Anordnung umfasst, sodass die Lichtquellen (202) in zwei orthogonalen Richtungen beabstandet sind.

13. Verfahren zur räumlichen Verfolgung, wobei das Verfahren Folgendes umfasst:
Einleiten einer Verfolgung von Lichtquellen (202), umfassend:
Bestimmen von Modulationsmustern, die Lichtquellen (202) in einer räumlichen Anordnung relativ zu einem Objekt zugeordnet sind, beinhaltend ein Modulationsmuster, das jeder Lichtquelle über einen Zeitraum zugeordnet ist, wobei jedes der Modulationsmuster eine Sequenz von geplanten Zuständen umfasst, die einen EIN-Zustand und einen AUS-Zustand einer entsprechenden Lichtquelle umfassen;
Anweisen einer Anpassung eines Zustands der Lichtquellen (202) basierend auf den Modulationsmustern;
Empfangen von Bildern über den Zeitraum über optische Sensoren (118), die konfiguriert sind, um die Lichtquellen (202) zu erfassen;
Identifizieren von Merkmalen, beinhaltend Merkmalspositionen der Merkmale basierend auf den Bildern über den Zeitraum;
Korrelieren der Merkmale mit den Lichtquellen (202) basierend mindestens auf den Merkmalen über den Zeitraum und dem Modulationsmuster über den Zeitraum; und
Bestimmen einer Stellung des Objekts basierend mindestens auf der Korrelation, den Merkmalspositionen und der räumlichen Anordnung der Lichtquellen (202), wobei die Stellung eine Richtung und eine Position im dreidimensionalen Raum umfasst;
wobei das Korrelieren der Merkmale ferner auf Suchbereichen der Bilder basiert, wobei die Suchbereiche auf mindestens einem von einer vorherigen bekannten Stellung des Objekts oder zuvor identifizierten Merkmalsstellen basieren;
wobei ein spezieller Suchbereich konfiguriert ist, um basierend auf einer erwartenden Nicht-Sichtbarkeit einer speziellen Lichtquelle relativ zu einem speziellen optischen Sensor herausgefiltert zu werden.

14. Verfahren nach Anspruch 12 oder 13, ferner umfassend Ausgeben einer optisch-inertialen Stellung über ein Hybridmodul basierend auf der Stellung, Inertialdaten von einem Inertialsensor und Luftfahrzeugnavigationsdaten von einem Navigationssystem eines Luftfahrzeugs.

15. Verfahren nach einem der Ansprüche 12 bis 14, wobei das Verfahren unter Verwendung eines luftfahrzeugbasierten System für eine kopfgetragene Anzeige (HWD) durchgeführt wird und wobei das Objekt an mindestens eine der Lichtquellen (202) oder einen der optischen Sensoren (118) des luftfahrzeugbasierten Systems für eine kopfgetragene Anzeige (HWD) gekoppelt ist; und/oder wobei das Objekt ein Teilsystem für eine kopfgetragene Anzeige (HWD) umfasst; und/oder wobei eine Gesamtanzahl von EIN-Zuständen für jede Sequenz von geplanten Zuständen jedes Modulationsmusters größer ist als eine Gesamtanzahl von AUS-Zuständen.

## Revendications

1. Système de suivi spatial, le système comprenant :
des sources de lumière (202) disposées spatialement par rapport à un objet ;
des capteurs optiques (118) configurés pour détecter les sources de lumière (202) ; et
un dispositif commande couplé de manière communicative aux sources de lumière (202) et aux capteurs optiques (118), dans lequel le dispositif de commande comprend un ou plusieurs processeurs configurés pour exécuter un ensemble d'instructions de programme stockées dans une mémoire, l'ensemble d'instructions de programme étant configuré pour amener les un ou plusieurs processeurs à :
initialiser un suivi des sources de lumière (202) comprenant :
la détermination de modèles de modulation qui sont mappés sur les sources de lumière (202), y compris un modèle de modulation mappé sur chaque source de lumière sur une période de temps, dans lequel chacun des modèles de modulation comprend une séquence d'états planifiés comprenant un état ON et un état OFF d'une source de lumière correspondante ;
la direction d'un réglage d'un état des sources de lumière (202) sur la base des modèles de modulation ;
la réception d'images via les capteurs optiques (118) sur la période de temps ;
l'identification de caractéristiques comportant des positions de caractéristiques des caractéristiques sur la base des images sur la période de temps ;
la corrélation des caractéristiques aux sources de lumière (202) sur la base au moins des caractéristiques sur la période de temps et du modèle de modulation sur la période de temps ; et
la détermination d'une pose de l'objet sur la base au moins de la corrélation, des positions des caractéristiques, et de la disposition spatiale des sources de lumière (202), dans lequel la pose comprend une direction et une position dans l'espace tridimensionnel ;
dans lequel la corrélation des caractéristiques est en outre basée sur des régions de recherche des images, dans lequel les régions de recherche sont basées sur au moins l'une d'une pose connue précédente de l'objet ou sur des emplacements de caractéristiques précédemment identifiés ;
dans lequel une région de recherche particulière est configurée pour être filtrée sur la base d'une non-visibilité attendue d'une source de lumière particulière par rapport à un capteur optique particulier.

2. Système selon la revendication 1, dans lequel l'identification des caractéristiques comprend : l'identification d'un groupe de pixels adjacents sur la base d'une luminosité de pixels d'une image des images ; et l'identification d'un centroïde du groupe de pixels adjacents.

3. Système selon la revendication 1 ou 2, dans lequel la détermination de la pose est basée sur une sélection de la pose parmi un ensemble de poses respectives déterminées et associées à une image respective d'un capteur optique respectif.

4. Système selon une quelconque revendication précédente, dans lequel la détermination de la pose est basée sur une combinaison de plusieurs images provenant de plusieurs capteurs optiques (118) à un moment particulier dans le temps.

5. Système selon une quelconque revendication précédente, dans lequel le dispositif de commande est en outre configuré pour délivrer en sortie une pose optique-inertielle, via un module hybride, sur la base de la pose, de données inertielles via un capteur inertiel du système, et les données de navigation d'aéronef via un système de navigation d'un aéronef.

6. Système selon une quelconque revendication précédente, dans lequel le système comprend un système d'affichage porté sur la tête (HWD) embarqué sur aéronef et dans lequel l'objet est couplé à au moins l'une des sources de lumière (202) ou des capteurs optiques (118).

7. Système selon une quelconque revendication précédente, dans lequel l'objet comprend un sous-système d'affichage porté sur la tête (HWD) embarqué sur aéronef.

8. Système selon une quelconque revendication précédente, dans lequel le dispositif de commande est en outre configuré pour un suivi image par image des caractéristiques sur la base des positions de caractéristiques de l'initialisation du suivi, dans lequel le suivi image par image des caractéristiques comporte une pose d'image déterminée via le suivi image par image est basé sur des régions de recherche prédites des images, dans lequel les régions de recherche prédites sont déterminées sur la base de données inertielles via un capteur inertiel et une ou plusieurs poses précédentes.

9. Système selon une quelconque revendication précédente, dans lequel le dispositif de commande est en outre configuré pour, sur la base des modèles de modulation, s'adapter aux anomalies associées à au moins l'une d'une absence d'une caractéristique attendue ou d'une caractéristique inattendue.

10. Système selon une quelconque revendication précédente, dans lequel une distance de Hamming, définie comme un nombre dénombrable d'états simultanés différents sur une séquence particulière d'états planifiés, d'un modèle de modulation particulier est d'au moins deux par rapport à un autre modèle de modulation.

11. Système selon une quelconque revendication précédente, dans lequel un nombre total d'états ON est supérieur à un nombre total d'états OFF pour chaque séquence d'états planifiés de chaque modèle de modulation.

12. Système selon une quelconque revendication précédente, dans lequel la disposition spatiale des sources de lumière (202) comprend une disposition non plane de sorte que les sources de lumière (202) sont espacées dans deux directions orthogonales.

13. Procédé de suivi spatial, le procédé comprenant :
l'initialisation d'un suivi de sources de lumière (202) comprenant :
la détermination de modèles de modulation qui sont mappés sur des sources de lumière (202) dans une disposition spatiale par rapport à un objet, y compris un modèle de modulation mappé sur chaque source de lumière sur une période de temps, dans lequel chacun des modèles de modulation comprend une séquence d'états planifiés comprenant un état ON et un état OFF d'une source de lumière correspondante ;
la direction d'un réglage d'un état des sources de lumière (202) sur la base des modèles de modulation ;
la réception d'images sur la période de temps via des capteurs optiques (118) configurés pour détecter les sources de lumière (202) ;
l'identification de caractéristiques comportant des positions de caractéristiques des caractéristiques sur la base des images sur la période de temps ;
la corrélation des caractéristiques aux sources de lumière (202) sur la base au moins des caractéristiques sur la période de temps et du modèle de modulation sur la période de temps ; et la détermination d'une pose de l'objet sur la base au moins de la corrélation, des positions des caractéristiques, et de la disposition spatiale des sources de lumière (202), dans lequel la pose comprend une direction et une position dans l'espace tridimensionnel ;
dans lequel la corrélation des caractéristiques est en outre basée sur des régions de recherche des images, dans lequel les régions de recherche sont basées sur au moins l'une d'une pose connue précédente de l'objet ou sur des emplacements de caractéristiques précédemment identifiés ;
dans lequel une région de recherche particulière est configurée pour être filtrée sur la base d'une non-visibilité attendue d'une source de lumière particulière par rapport à un capteur optique particulier.

14. Procédé selon la revendication 12 ou 13, comprenant en outre la délivrance en sortie d'une pose optique-inertielle, via un module hybride, sur la base de la pose, de données inertielles provenant d'un capteur inertiel, et de données de navigation d'un aéronef provenant d'un système de navigation d'un aéronef.

15. Procédé selon l'une quelconque des revendications 12 à 14, dans lequel le procédé est réalisé à l'aide d'un système d'affichage porté sur la tête (HWD) embarqué sur aéronef et dans lequel l'objet est couplé à au moins l'un des sources de lumière (202) ou des capteurs optiques (118) du système d'affichage porté sur la tête (HWD) embarqué sur aéronef ; et/ou dans lequel l'objet comprend un sous-système d'affichage porté sur la tête (HWD) ; et/ou dans lequel un nombre total d'états ON est supérieur à un nombre total d'états OFF pour chaque séquence d'états planifiés de chaque modèle de modulation.
